# EUROPÄISCHE PATENTANMELDUNG

(11) **EP 3 175 968 A1**
(43) Veröffentlichungstag der Anmeldung: **07.06.2017**
(21) Anmeldenummer: 15197545.5
(22) Anmeldetag: 02.12.2015
(51) Int. Cl.: B29C 47/00, B29C 47/10, B29C 47/76, B29B 17/04

(54) **VERFAHREN ZUR KONTINUIERLICHEN STOFFLICHEN VERWERTUNG VON ALTFRAKTIONEN AUS FASERN UND GEWEBEN AUF BASIS VON THERMOPLASTISCHEN KUNSTSTOFFEN**

(71) Anmelder: Reifenhäuser GmbH & Co. KG Maschinenfabrik, 53844 Troisdorf (DE)
(72) Erfinder: WEBER, Thorsten, 53721 Siegburg (DE); POHL, Tim, 50937 Köln (DE)
(74) Vertreter: Wagner Albiger & Partner Patentanwälte mbB

(57) **Zusammenfassung**

Die Erfindung betrifft ein Verfahren zur kontinuierlichen stofflichen Verwertung von Altfraktionen aus Fasern und Geweben auf Basis von thermoplastischen Kunststoffen, bei dem einer Extrusionseinrichtung (1) in Extrusionsrichtung (E) betrachtet zunächst die Altfraktion aus Fasern und Geweben und nachfolgend eine aus thermoplastischen Polymeren und Additiven gebildete weitere Fraktion zugeführt wird, die zugeführte Altfraktion und die weitere Fraktion in der Extrusionseinrichtung (1) miteinander vermischt, entgast und gemeinsam aus der Extrusionseinrichtung (1) unter Ausbildung eines Extrudats (6) extrudiert werden, in welchem die Altfraktion unter zumindest teilweiser Erhaltung der Faserstruktur in das thermoplastische Polymer der weiteren Fraktion eingebettet ist, wobei das Vermischen, Entgasen und Extrudieren der Altfraktion und der weiteren Fraktion bei Temperaturen durchgeführt werden, die unterhalb der Erweichungstemperatur mindestens eines der thermoplastischen Kunststoffe der Altfraktion liegt.

## Beschreibung

Die Erfindung betrifft ein Verfahren zur kontinuierlichen stofflichen Verwertung von Altfraktionen aus Fasern und Geweben auf Basis von thermoplastischen Kunststoffen, wie sie beispielsweise in Kunststoff-Recycling-Prozessen von Altfahrzeugen anfallen.

Die Industrie ist bestrebt, werkstofflich separierte Schredder-Fraktionen aus Fasern und Geweben, zum Beispiel aus Altfahrzeugen, stofflich wiederzuverwerten. Diese Altfraktionen umfassen Fasern und Gewebe auf Basis von thermoplastischen Kunststoffen, wobei es bekannt ist, derartige Altfraktionen in Extrusionsverfahren einem Ein- oder Doppelschneckenextruder zuzuführen, und mit dessen Hilfe die Altfraktion aufzuschmelzen und zu homogenisieren sowie nachfolgend zu einem Extrudat zu verarbeiten. Falls die Altfraktion aus unterschiedlichen Polymeren besteht, werden Additive und/oder zusätzliche Polymere mit verarbeitet, um einen formstabilen Verbund des erhaltenen Extrudats zu erreichen.

Problematisch bei dieser vollständigen Aufschmelzung und Extrusion der die Altfraktion bildenden thermoplastischen Kunststoffe ist es, dass durch vorgelagerte Sortierprozesse die Altfraktionen einen hohen Feuchteanteil aufweisen, der einem stabilen Extrusionsprozess entgegensteht. Ein Extrusionsprozess wird außerdem dadurch erschwert, dass die Altfraktion nicht stetig mit konstanter Fördermenge dem Extruder zugeführt werden kann und überdies die Altfraktion häufig Verunreinigungen aus Staub, Papier, Elastomeren etc. enthält, welche die Herstellung eines hochwertigen Bauteils weiter erschweren.

Aufgrund dieser Schwierigkeiten steht die stoffliche Verwertung im Wettbewerb zur energetischen Verwertung der Altfraktionen und ist dieser üblicherweise unterlegen. Darüber hinaus gehen bei den bekannten Extrusionsverfahren die vorhandenen positiven mechanischen Eigenschaften der Fasern und Gewebe verloren und es werden nur noch minderwertige Produkte hervorgebracht.

Aufgabe der Erfindung ist es daher, ein Verfahren zur kontinuierlichen stofflichen Verwertung von Altfraktionen aus Fasern und Geweben auf Basis von thermoplastischen Kunststoffen vorzuschlagen, welches die rationelle und wirtschaftliche Wiederverwertung der Fasern und Gewebe zu einem hochwertigen Produkt ermöglicht, bei dem die erhaltenen Bauteileigenschaften einen Mehrwert bringen, der den wirtschaftlichen Vergleich mit der thermischen Verwertung positiv ausfallen lässt.

Diese Aufgabe wird erfindungsgemäß mit einem Verfahren gemäß den Merkmalen des Patentanspruchs 1 gelöst.

Vorteilhafte Ausgestaltungen und Weiterbildungen der Erfindung sind Gegenstand der abhängigen Ansprüche.

Der erfindungsgemäße Vorschlag beruht darauf, einer Extrusionseinrichtung in Extrusionsrichtung betrachtet zunächst die Altfraktion aus Fasern und Geweben und nachfolgend eine aus thermoplastischen Polymeren und Additiven gebildete weitere Fraktion zuzuführen, die zugeführte Altfraktion und die weitere Fraktion in der Extrusionseinrichtung sodann miteinander zu vermischen, zu entgasen und gemeinsam aus der Extrusionseinrichtung unter Ausbildung eines Extrudats zu extrudieren, in welchem die Altfraktion unter zumindest teilweiser Erhaltung der Faserstruktur in das thermoplastische Polymer der weiteren Fraktion eingebettet ist. Dies wird dadurch bewirkt, dass das Vermischen, Entgasen und Extrudieren der Altfraktion und der weiteren Fraktionen bei Temperaturen durchgeführt werden, die unterhalb der Erweichungstemperatur mindestens eines der thermoplastischen Kunststoffe der Altfraktionen liegt.

Durch Anwendung des erfindungsgemäßen Verfahrens wird demgemäß ein Extrudat erhalten, bei welchem das thermoplastische Polymer der weiteren Fraktion als Matrixmaterial vorliegt und durch eingebettete, aber in der Struktur weitgehend erhaltene Fasern und Gewebeabschitte verstärkt ist, so dass ein Extrudat mit besonders guten mechanischen Eigenschaften erhalten wird, welches sich für hochwertige Anwendungen mit entsprechend hohen Anforderungen an die mechanische Festigkeit und dergleichen eignet.

Erfindungsgemäß wird somit die Extrusion der Altfraktion aus Fasern und Gewebe und der weiteren Fraktionen in einer gemeinsamen Extrusionseinrichtung durchgeführt, wobei in Abhängigkeit von den thermoplastischen Kunststoffen in der Altfraktion eine entsprechende Temperaturführung in der Extrusionseinrichtung sowie entsprechende Auswahl der Rohstoffe, insbesondere Polymere der weiteren Fraktion vorgenommen wird, dergestalt, dass die Temperatur innerhalb der Extrusionseinrichtung in jedem Fall unterhalb der Erweichungstemperatur mindestens eines thermoplastischen Kunststoffes der Altfraktion verbleibt, so dass die Faserstruktur erhalten bleibt. Dies bedingt, dass als thermoplastische Polymere der weiteren Fraktion insbesondere solche in Frage kommen, deren Schmelzpunkt unterhalb der Erweichungstemperatur der thermoplastischen Kunststoffe liegt, die im Rahmen der Altfraktion verarbeitet werden.

Nach einem Vorschlag der Erfindung wird die Altfraktion vor oder nach der Zuführung der weiteren Fraktion in der Extrusionseinrichtung auf eine Temperatur von 95 bis 105 Grad, vorzugsweise ca. 100 Grad Celsius erwärmt und es wird eine atmosphärische und/oder durch Erzeugen eines Unterdrucks erzwungene Entgasung der Altfraktion oder der bereits mit der weiteren Fraktion vermischten Altfraktion in der Extrusionseinrichtung vorgenommen. Hierbei werden flüchtige Verunreinigungen auf der Oberfläche der Altfraktion entfernt und es wird der Altfraktion der Feuchtegehalt zumindest soweit entzogen, dass sich eine Restfeuchte einstellt, die dem Extrusionsprozess nicht entgegensteht, da die Gasübergangstemperatur der Altfraktion abhängig von der Restfeuchte ist. Durch eine Regelung des Feuchtegehalts der Altfraktion kann sichergestellt werden, dass die Verarbeitung des zugegebenen thermoplastischen Polymers und der Additive der weiteren Fraktion unterhalb der Erweichungstemperatur mindestens eines der thermoplastischen Kunststoffe der Altfraktion erfolgt.

Die weitere Fraktion kann erfindungsgemäß aus thermoplastischen Polymeren und Additiven gebildet sein, die beispielsweise in nicht aufgeschmolzenem Zustand der Extrusionseinrichtung zugeführt werden können und nachfolgend gemeinsam mit der Altfraktion zum Extrudat verarbeitet werden.

Nach einem weiteren Vorschlag der Erfindung wird alternativ die weitere Fraktion vor der Zuführung in die Extrusionseinrichtung in einem separaten Plastifizierextruder, beispielsweise einem Einschneckenextruder, plastifiziert und von diesem im plastifizierten Zustand der Extrusionseinrichtung zugeführt, woraufhin anschließend die Altfraktion gemeinsam mit dieser bereits plastifizierten weiteren Fraktion entgast wird. Durch Zuführung der weiteren Fraktion in bereits plastifiziertem Zustand wird darüber hinaus die Altfraktion im Rahmen der Verarbeitung innerhalb der Extrusionseinrichtung weniger intensiv erwärmt, so dass die Temperatur zuverlässig unterhalb der Erweichungstemperatur mindestens eines thermoplastischen Kunststoffes der Altfraktion gehalten werden kann. Das bereits aufgeschmolzene Polymer kann ferner leichter in die unweigerlich in der Altfraktion innerhalb der Extrusionseinrichtung vorliegenden Zwischenräume eingebracht werden, da diese von der im plastischen Zustand vorliegenden zweiten Fraktion aufgefüllt werden.

Die bereits im plastifizierten Zustand der Extrusionseinrichtung zugeführte weitere Fraktion kann prinzipiell an jeder geeigneten Stelle der Extrusionseinrichtung zugeführt werden, wobei jedoch vorgesehen ist, dass dies in Extrusionsrichtung betrachtet stets hinter der Zuführung der Altfraktion bewirkt wird. Dabei muss jedoch nicht notwendigerweise ein größerer Abstand eingehalten werden, sondern es ist auch möglich, die bereits aufgeschmolzene weitere Fraktion unmittelbar nach der Altfraktion der Extrusionseinrichtung zuzuführen, um die Altfraktion bereits frühzeitig vorzuwärmen.

Darüber hinaus kann die weitere Fraktion nach der Plastifizierung in dem Plastifizierextruder auch in beispielsweise zwei Teilströme aufgeteilt werden, wobei die Teilströme der Extrusionseinrichtung an den in Extrusionsrichtung betrachtet aufeinanderfolgenden Positionen der Extrusionseinrichtung zugeführt werden. Beispielsweise kann ein erster Teilstrom der Extrusionseinrichtung möglichst unmittelbar im Anschluss an die Zuführung der Altfraktion zugeführt werden, während ein weiterer Teilstrom an einem in Extrusionsrichtung betrachtet weiter stromabwärtigen Punkt der Extrusionseinrichtung zugeführt wird.

Das erfindungsgemäße Verfahren bedingt, dass im Sinne der im Extrudat erhaltenen Faserstruktur Fasern und Gewebe in der Altfraktion vorliegen, die aufgrund der verwendeten thermoplastischen Kunststoffe eine hohe Wärmeformbeständigkeit aufweisen. Dies ist beispielsweise bei Fasern und Geweben auf Basis von Polyamid oder Polyester der Fall.

Die Altfraktion wird nach einem weiteren Vorschlag der Erfindung in einem Anteil von mindestens 50% des erhaltenen Extrudats der Extrusionseinrichtung zugeführt und beispielsweise zu einem Rohr, Profil, Kabel oder einer Folie oder Platte, zu einem Kernmaterial eines Mehrschicht-, beispielsweise Co-Extrusionsverbundes oder einem Schmelzestrang verarbeitet. Auch ist es möglich, dreidimensionale Bauteile herzustellen, indem in eine Pressform bzw. ein Presswerkzeug extrudiert wird, um anschließend ein Formteil herzustellen oder aus dem Extrudat ein Granulat geformt wird, welches nachfolgend zum Beispiel im Spritzgießprozess weiterverarbeitet wird.

Weitere Einzelheiten der Erfindung werden nachfolgend anhand von Ausführungsbeispielen erläutert. Es zeigen:
- Fig. 1: in schematischer Darstellung eine Extrusionseinrichtung gemäß einer ersten Ausführungsform der Erfindung
- Fig. 2: eine Extrusionseinrichtung gemäß einer zweiten Ausgestaltung der Erfindung
- Fig. 3: eine Extrusionseinrichtung gemäß einer dritten Ausgestaltung der Erfindung.

Aus den Figuren sind verschiedene Ausgestaltungen von Extrusionseinrichtungen ersichtlich, die mit Bezugszeichen 1 versehen sind und zur Anwendung des vorangehend beschriebenen Verfahrens eingesetzt werden. Bei der Extrusionseinrichtung kann es sich wahlweise um einen Einschnecken- oder auch einen Doppelschneckenextruder an sich bekannter Bauart handeln, dies ist vom Fachmann je nach Anwendungsfall auszuwählen.

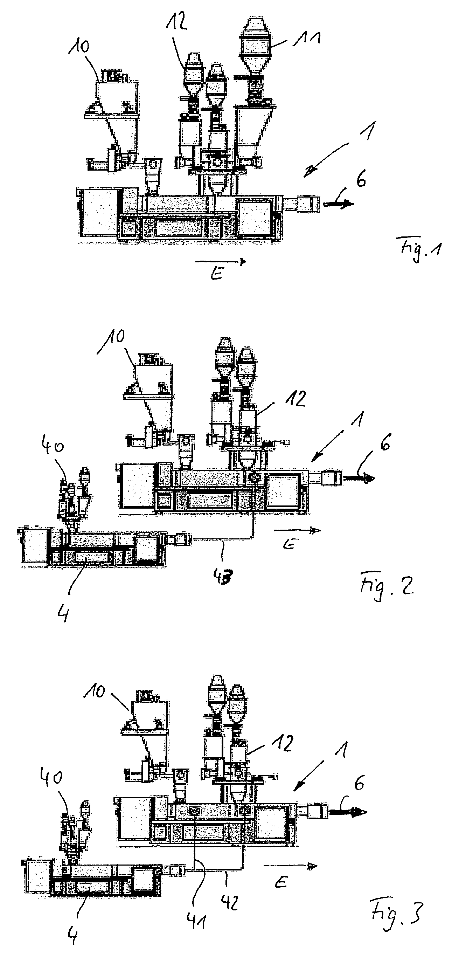

Im Ausführungsbeispiel gemäß der Figur 1 umfasst die Extrusionseinrichtung 1 in Extrusionsrichtung E betrachtet zunächst eine Zuführeinrichtung 10 für Altfraktionen aus Fasern und Geweben auf Basis thermoplastischer Kunststoffe, wie sie beispielsweise aus Recyclingprozessen von Altfahrzeugen in Form von Schredder-Flusen oder Faser-Gewebe-Fraktionen vorliegen. Diese Altfraktion wird zunächst in der Extrusionseinrichtung verdichtet und homogenisiert, bevor in Extrusionsrichtung E betrachtet nachgeordnet über eine Dosierstation 11 ein thermoplastisches Polymer sowie über eine weitere Dosierstation 12 geeignete Additive gemeinsam der Extrusionseinrichtung 1 zugeführt werden und in der Extrusionseinrichtung 1 mit der bereits geförderten Altfraktion vermischt, entgast und unter Ausbildung eines Extrudats 6 gemeinsam aus der Extrusionseinrichtung 1 extrudiert werden. Hierbei erfolgt die Temperaturführung innerhalb der Extrusionseinrichtung 1 so, dass das Vermischen, Entgasen und Extrudieren der Altfraktion und der weiteren Fraktion bei Temperaturen durchgeführt werden, die unterhalb der Erweichungstemperatur mindestens eines der thermoplastischen Kunststoffe der Altfraktion liegt, so dass im Extrudat 6 die Altfraktion unter teilweiser Erhaltung der Faserstruktur in das thermoplastische Polymer der weiteren Fraktion eingebettet ist, welches somit ein Matrixmaterial für die Aufnahme der Fasern bzw. Gewebereste bildet.

Eine typische Rezeptur kann z.B. folgendermaßen ausgebildet sein:

| | |
|---|---|
| 40-80 % | Altfraktion (Fasern, Gewebe etc.) |
| 20-50 % | thermoplastisches Polymer (z.B. HDPE, MDPE, PP, EVA oder Recycling-Shredderware) |
| 5-50 % | Additive (Haftvermittler, Farbe, Gleitmittel etc.) |

Zum Entgasen wird eine Temperatur in der Extrusionseinrichtung 1 von vorzugsweise 100° C oder mehr benötigt, während für das Homogenisieren und Ausformen Temperaturen von etwa 120° C bis 160 °C vorgesehen werden.

Aus der Figur 2 ist demgegenüber eine abgewandelte Anordnung ersichtlich, bei der die Zuführung der Altfraktion und der Additive über die entsprechenden Dosiereinrichtungen 10, 12 analog zur Ausgestaltung in Figur 1 erfolgt, jedoch das Polymer, welches gemeinsam mit den Additiven die weitere Fraktion bildet, zunächst separat in einem Plastifizierextruder 4 über eine Dosierstation 40 aufgegeben und plastifiziert wird und über eine entsprechende Zuleitung 43 in bereits plastifiziertem Zustand der Extrusionseinrichtung 1 zugeführt wird.

Aus dem Ausführungsbeispiel gemäß der Figur 3 ist eine demgegenüber nochmals abgewandelte Anordnung ersichtlich, bei der das thermoplastische Polymer aus dem Plastifizierextruder 4 in zwei Teilströme 41, 42 aufgeteilt wird, wobei der erste Teilstrom 41 der Extrusionseinrichtung 1 unmittelbar nach der Aufgabe der Altfraktion zugeführt, während der weitere Teilstrom 42 an einem in Extrusionsrichtung E betrachtet stromabwärtigen Position gemeinsam mit den aus der Dosierstation 12 eindosierten Additiven in die Extrusionseinrichtung 1 zugeführt wird.

Das in allen vorangehend dargestellten Ausführungen erhaltene Extrudat 6 kann beispielsweise zu einem Rohr, Profil, Kabel, einer Folie, Platte oder zu einem Kernmaterial eines Mehrschichtverbundes, wie eines Co-Extrusionsverbundes verarbeitet werden oder einen Schmelzestrang bilden, der nachfolgend beispielsweise zu einem dreidimensionalen Bauteil verpresst wird oder auch zu einem Granulat geformt werden, welches nachfolgend zum Beispiel im Spritzgießverfahren zu einem Bauteil weiterverarbeitet werden kann.

Die erhaltenen Extrudate 6 zeichnen sich durch hochwertige mechanische Eigenschaften bedingt durch die Erhaltung der Faserstruktur in dem als Matrixmaterial dienenden Polymer aus, so dass letztlich ein faserverstärktes Polymer aus den Altfraktionen und der weiteren Fraktion erhalten wird.

## Patentansprüche

1. Verfahren zur kontinuierlichen stofflichen Verwertung von Altfraktionen aus Fasern und Geweben auf Basis von thermoplastischen Kunststoffen, bei dem einer Extrusionseinrichtung (1) in Extrusionsrichtung (E) betrachtet zunächst die Altfraktion aus Fasern und Geweben und nachfolgend eine aus thermoplastischen Polymeren und Additiven gebildete weitere Fraktion zugeführt wird, die zugeführte Altfraktion und die weitere Fraktion in der Extrusionseinrichtung (1) miteinander vermischt, entgast und gemeinsam aus der Extrusionseinrichtung (1) unter Ausbildung eines Extrudats (6) extrudiert werden, in welchem die Altfraktion unter zumindest teilweiser Erhaltung der Faserstruktur in das thermoplastische Polymer der weiteren Fraktion eingebettet ist, wobei das Vermischen, Entgasen und Extrudieren der Altfraktion und der weiteren Fraktion bei Temperaturen durchgeführt werden, die unterhalb der Erweichungstemperatur mindestens eines der thermoplastischen Kunststoffe der Altfraktion liegt.

2. Verfahren nach Anspruch 1, **dadurch gekennzeichnet, dass** die Altfraktion vor oder nach der Zuführung der weiteren Fraktion in der Extrusionseinrichtung (1) auf eine Temperatur von 100°C bis 160°C erwärmt und atmosphärisch oder mittels Unterdruck entgast wird.

3. Verfahren nach Anspruch 1 oder 2, **dadurch gekennzeichnet, dass** die weitere Fraktion vor der Zuführung in die Extrusionseinrichtung (1) in einem separaten Plastifizierextruder (4) plastifiziert und von diesem in plastifiziertem Zustand der Extrusionseinrichtung (1) zugeführt wird und anschließend die Altfraktion mit der weiteren Fraktion gemeinsam entgast wird.

4. Verfahren nach Anspruch 3, **dadurch gekennzeichnet, dass** die weitere Fraktion nach der Plastifizierung in dem Plastifizierextruder (4) in zwei Teilströme aufgeteilt wird und die Teilströme der Extrusionseinrichtung an in Extrusionsrichtung (E) betrachtet aufeinanderfolgenden Positionen der Extrusionseinrichtung (1) zugeführt werden.

5. Verfahren nach einem der Ansprüche 1 bis 4, **dadurch gekennzeichnet, dass** die thermoplastischen Polymere und die Additive der weiteren Fraktion gemeinsam oder an in Extrusionsrichtung (E) betrachtet aufeinanderfolgenden Positionen der Extrusionseinrichtung (1) zugeführt werden.

6. Verfahren nach einem der Ansprüche 1 bis 5, **dadurch gekennzeichnet, dass** die Fasern und Gewebe der Altfraktion auf Basis von Polyamid oder Polyester gebildet sind.

7. Verfahren nach einem der Ansprüche 1 bis 6, **dadurch gekennzeichnet, dass** die Altfraktion mindestens in einem Anteil von 50% des Extrudats (6) der Extrusionseinrichtung (1) zugeführt wird.

8. Verfahren nach einem der Ansprüche 1 bis 7, **dadurch gekennzeichnet, dass** der Feuchtegehalt der Altfraktion geregelt wird.

9. Verfahren nach einem der Ansprüche 1 bis 8, **dadurch gekennzeichnet, dass** das Extrudat (6) zu einem Rohr, Profil, Kabel, einer Folie, Platte, zu einem Kernmaterial eines Mehrschichtverbundes, einem Schmelzestrang oder zu einem Granulat geformt wird.
